# DEMANDE DE BREVET EUROPEEN

(11) **EP 3 620 347 A1**
(43) Date de publication de la demande: **11.03.2020**
(21) Numéro de dépôt: 19195051.8
(22) Date de dépôt: 03.09.2019
(51) Int. Cl.: B61L 3/00, B61L 27/00, G06Q 50/06, G06Q 10/04

(54) **OPTIMISATION DE CONSOMMATION D'ÉNERGIE ÉLECTRIQUE D'UNE PLURALITÉ DE VÉHICULES**

(30) Priorité: 06.09.2018 FR 1858007
(71) Demandeur: ALSTOM Transport Technologies, 93400 Saint-Ouen (FR)
(72) Inventeur: BALLESTEROS, Javier, 75116 PARIS (FR); PAIVA, Felipe, 75005 PARIS (FR)
(74) Mandataire: Lavoix

(57) **Abrégé**

La présente invention concerne un procédé d'optimisation de consommation électrique d'une pluralité de véhicules connectés à une même section électrique d'alimentation. Le procédé comporte une étape de détermination (110) d'un profil de conduite préféré d'un véhicule en fonction d'une position courante du véhicule et d'une destination du véhicule, chaque profil de conduite préféré comportant une pluralité de créneaux temporels et pour chaque créneau temporel, une valeur de traction souhaitée et/ou une valeur de freinage souhaitée. Le procédé comporte en outre des étapes de transmission (120) du profil de conduite préféré à un système ATS, d'acquisition (130) par un système ATO du véhicule d'un profil de conduite optimisé généré par le système ATS, et d'application (140) du profil de conduite optimisé à la conduite du véhicule.

## Description

La présente invention concerne un procédé d'optimisation de consommation électrique d'une pluralité de véhicules.

La présente invention concerne également un produit programme d'ordinateur et des systèmes de conduite et de supervision automatisés associés.

En particulier, la présente invention permet d'optimiser la consommation électrique d'une pluralité de véhicules ferroviaires circulant dans une même section électrique et disposant chacun d'un système conduite automatisé, dit système ATO (de l'anglais « Automatic Train Opération »), qui est supervisé par un système de supervision automatisé, dit système ATS (de l'anglais « Automatic Train Supervision »).

De manière connue en soi, un véhicule ferroviaire, tel que notamment un train, comporte deux systèmes de freinage parallèles.

L'un de ces systèmes est un système de freinage mécanique, utilisant des moyens de freinage mécaniques qui garantissent une décélération rapide du train. Ce système est généralement utilisé lorsque le train a une vitesse relativement faible ce qui est par exemple le cas lorsque le train effectue des arrêts opérationnels.

L'autre système est un système de freinage électrique, utilisant les moteurs du train en tant que générateurs de l'énergie électrique pour réduire la vitesse du train. Ce système est généralement utilisable lorsque le train a une vitesse relativement élevée.

Dans un tel cas, l'énergie électrique générée lors des phases de freinage est dissipée via des résistances adaptées ou est injectée dans le réseau électrique alimentant la section électrique correspondante.

Ainsi, lorsque deux trains circulent dans la même section électrique avec un premier train qui se trouve par exemple dans une phase d'accélération, l'énergie électrique injectée sur le réseau par un deuxième train en phase de freinage peut être récupéré par le premier train. Dans le cas contraire, cette énergie est dissipée par le réseau et est donc perdue. Il est également possible de stocker cette énergie en vue de son utilisation ultérieure mais une telle solution présente souvent un coût très important.

On conçoit alors qu'il existe un besoin d'optimisation de phases de freinage et d'accélération de différents trains circulant dans une même section électrique.

Pour ce faire, l'état de la technique propose de synchroniser les heures de départ et d'arrivée de ces différents trains pour optimiser leurs phases d'accélération et de freinage les plus signifiantes. Cela a donc pour résultat d'optimiser la consommation électrique de l'ensemble des trains circulant dans une même section électrique.

Les horaires ainsi obtenus sont mémorisés dans le système ATS qui définit alors les départs et les arrivées des trains.

Toutefois, un tel mode de fonctionnement prend en compte uniquement les phases les plus significatives d'accélération et de freinage ce qui ne permet pas de limiter efficacement la consommation électrique dans la section électrique considérée. En outre, le traitement effectué ne prend pas en compte d'éventuelles stratégies de conduites développées par le système ATO de chacun des trains.

Finalement, ce mode de fonctionnement est basé sur les horaires fixes et se trouve inadapté par exemple en cas de retards d'un ou de plusieurs trains.

La présente invention a pour but de remédier à ces inconvénients et de proposer donc un procédé et un système permettant d'optimiser la consommation électrique de véhicules connectés à une même section électrique d'alimentation qui prend en compte les éventuels retards de ces véhicules ainsi que tout autre évènement imprévu.

À cet effet, l'invention a pour objet un procédé d'optimisation de consommation électrique d'une pluralité de véhicules connectés à une même section électrique d'alimentation, chaque véhicule comprenant :
- un système de traction propre à entrainer le véhicule correspondant en mouvement en fonction d'une valeur de traction,
- un système de freinage propre à freiner le véhicule correspondant en fonction d'une valeur de freinage et à injecter de l'énergie électrique récupérée suite au freinage, et
- un système de conduite automatisé, dit système ATO, apte à communiquer à distance avec un système de supervision automatisé, dit système ATS ;
le procédé comportant les étapes suivantes, mises en oeuvre par le système ATO de chacun des véhicules :
- détermination d'un profil de conduite préféré du véhicule correspondant en fonction d'une position courante du véhicule et d'une destination du véhicule, chaque profil de conduite préféré comportant une pluralité de créneaux temporels et pour chaque créneau temporel, une valeur de traction souhaitée et/ou une valeur de freinage souhaitée ;
- transmission du profil de conduite préféré au système ATS ;
- acquisition d'un profil de conduite optimisé généré par le système ATS, le profil de conduite optimisé étant déterminé en fonction des profils de conduite préférés transmis au système ATS par l'ensemble des véhicules connectés à ladite section électrique et comportant pour chaque créneau temporel du profil de conduite préféré correspondant, une valeur de traction optimisée et/ou une valeur de freinage optimisée, pour minimiser la consommation électrique dans ladite section électrique;
- application du profil de conduite optimisé à la conduite du véhicule correspondant.

Suivant d'autres aspects avantageux de l'invention, le procédé comprend une ou plusieurs des caractéristiques suivantes, prise(s) isolément ou suivant toutes les combinaisons techniquement possibles :
- le profil de conduite préféré comporte en outre pour chaque créneau temporel, une valeur de traction minimale et/ou une valeur de traction maximale définie(s) par des contraintes opérationnelles du véhicule correspondant ;
- le profil de conduite préféré comporte en outre pour chaque créneau temporel, une valeur de freinage maximale définie par des contraintes opérationnelles du véhicule correspondant ;
- le profil de conduite optimisé est déterminé de sorte à respecter la valeur de traction minimale et/ou la valeur de traction maximale et/ou la valeur de freinage maximale dans chaque créneau temporel ;
- le profil de conduite optimisé est déterminé de sorte à respecter au moins l'un des critères choisi dans le groupe :
   - pour chaque créneau temporel, minimisation de la différence entre un effort de traction total correspondant à une somme des valeurs de traction optimisées de l'ensemble des véhicules dans ladite section électrique et un effort de freinage total correspondant à une somme des valeurs de freinage optimisées de l'ensemble des véhicules dans ladite section électrique ;
   - pour chaque créneau temporel, limitation d'un effort de traction total correspondant à une somme des valeurs de traction optimisées de l'ensemble des véhicules dans ladite section électrique ;
   - attribution d'une valeur de traction et/ou d'une valeur de freinage non-autorisée(s) dans un créneau temporel donné, à un créneau temporel voisin.
- le procédé comporte en outre une étape initiale de détermination d'une pluralité de profils de conduite possibles du véhicule correspondant en fonction de sa position courante et de sa destination, chaque profil de conduite possible comportant une pluralité de créneaux temporels et pour chaque créneau temporel, une valeur de traction possible et une valeur de freinage possible ; le profil de conduite préféré étant choisi parmi la pluralité de profils de conduite possibles ;
- l'étape d'application du profil de conduite optimisé à la conduite du véhicule correspondant comprend au moins l'une des caractéristiques suivantes :
   - respect de la valeur de traction optimisée pour chaque créneau temporel ;
   - respect de la valeur de freinage optimisée pour chaque créneau temporel lorsque cette valeur permet de respecter des contraintes opérationnelles du véhicule correspondant et dans le cas contraire, application de la valeur de freinage souhaitée dans le créneau temporel correspondant ;
   - décalage de l'heure de départ et/ou de l'heure d'arrivée prévue(s) initialement ;
- les profils de conduite optimisés sont transmis aux véhicules par des signaux radioélectriques, de préférence sous la forme de messages publics.

L'invention a également pour objet un produit programme d'ordinateur comportant des instructions logicielles qui, lorsque mises en oeuvre par un équipement informatique, mettent en oeuvre le procédé tel que défini précédemment.

L'invention a également pour objet un système de conduite automatisé, dit système ATO, pour un véhicule connecté à une section électrique d'alimentation, le véhicule comprenant :
- un système de traction entrainant le véhicule en mouvement en fonction d'une valeur de traction, et
- un système de freinage freinant le véhicule en fonction d'une valeur de freinage et injectant de l'énergie électrique récupérée suite au freinage dans ladite zone électrique ;
le système ATO étant apte à communiquer à distance avec un système de supervision automatisé, dit système ATS, et comporte des moyens techniques configurés pour mettre en oeuvre les étapes du procédé tel que défini ci-dessus.

L'invention a également pour objet un système de supervision automatisé, dit système ATS, apte à communiquer à distance avec un ou plusieurs systèmes ATO tels que définis ci-dessous pour recevoir des profils de conduite préférés générés par ces systèmes ATO et comportant des moyens techniques configurés pour déterminer un profil de conduite optimisé à partir de ces profils de conduite préférés.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'une pluralité de véhicules ferroviaires circulant sur une même section électrique et comportant chacun un système de conduite automatisé selon l'invention supervisé par un système de supervision automatisé selon l'invention ; et
- la figure 2 est un organigramme d'un procédé d'optimisation selon l'invention, le procédé étant mis en oeuvre par les systèmes de conduite automatisés et le système de supervision automatisé de la figure 1.

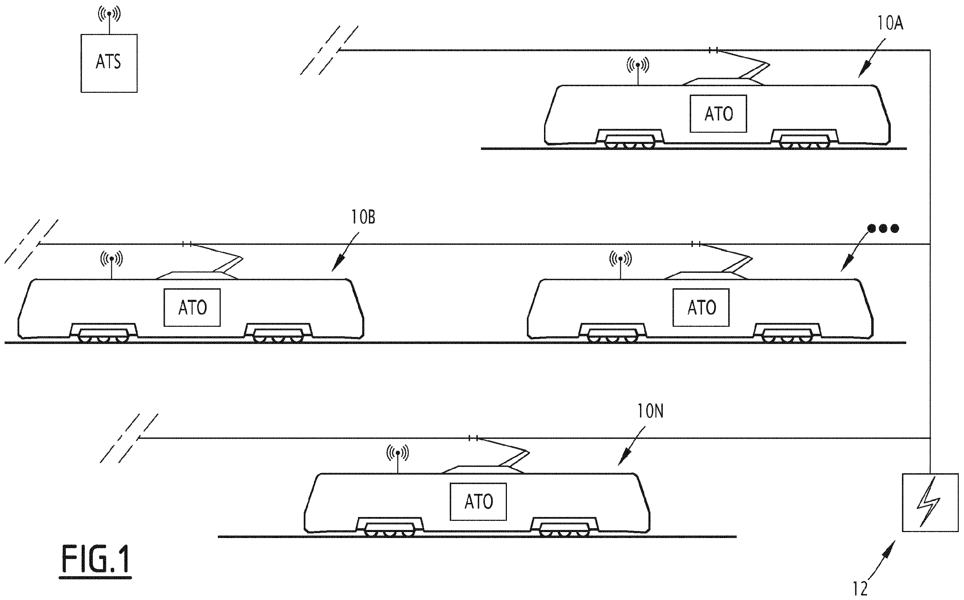

Les véhicules 10A,...,10N de la figure 1 sont avantageusement des véhicules ferroviaires, par exemple des trains, notamment des trains automatiques ou des trains contrôlés au moins partiellement par des conducteurs, comme par exemple des rames de métro.

En variante, les véhicules sont des bus électriques ou des tramways.

Les véhicules ferroviaires 10A,...,10N circulent par exemple sur plusieurs voies ferroviaires, éventuellement parallèles ou voisines, et sont propres à être alimentés lorsqu'ils circulent sur ces voies par l'intermédiaire d'une même section électrique 12 d'alimentation.

En particulier, une telle section électrique 12 comporte des moyens de transmission électrique communs permettant d'alimenter au moins partiellement chacun des véhicules ferroviaires 10A,...,10N, lorsqu'ils circulent sur les voies ferroviaires associées à ladite section électrique, ainsi que de mettre en oeuvre des échanges de surplus d'énergie électrique entre ces différents véhicules 10A,...,10N selon des méthodes connues en soi.

Les véhicules ferroviaires 10A,...,10N circulent sur les voies correspondantes selon des contraintes opérationnelles déterminées par chacun de ces véhicules.

Les contraintes opérationnelles définissent notamment le trajet du véhicule 10A,...,10N, ses points d'arrêt opérationnels, la topologie de la voie, la distance avec des véhicules voisins, la régulation du trafic, etc.

Chaque véhicule ferroviaire 10A,...,10N comporte notamment un système de traction et un système de freinage électrique.

Le système de traction comporte un ou plusieurs moteurs permettant de mettre en mouvement le véhicule ferroviaire 10A,...,10N correspondant en utilisant de l'énergie électrique fournie par la section électrique 12. Le fonctionnement de ce système est défini à chaque instant par une valeur de traction correspondant par exemple à un pourcentage de l'effort total que ce système est apte à fournir.

Le système de freinage électrique permet de freiner le mouvement du véhicule ferroviaire correspondant 10A,...,10N en utilisant les moteurs du système de traction en tant que générateurs. Ce système de freinage permet en outre d'injecter l'énergie électrique générée par les moteurs dans la section électrique 12.

Le fonctionnement du système de freinage est défini à chaque instant par une valeur de freinage correspondant par exemple à un pourcentage de l'effort total que ce système est apte à exercer pour freiner le véhicule ferroviaire correspondant.

Chaque véhicule ferroviaire 10A,...,10N comporte en outre un système de supervision automatisé, dit système ATO.

Ce système ATO permet notamment de définir un profil de conduite du véhicule ferroviaire 10A,...,10N correspondant, selon lequel la conduite de ce véhicule s'effectue de manière au moins partiellement automatique. Ce profil de conduite est déterminé notamment en fonction des contraintes opérationnelles du véhicule 10A,..., 10N correspondant.

Le fonctionnement de chaque système ATO est supervisé par un système de supervision automatisé, dit système ATS.

Le système ATS est un système distant disposé par exemple dans un poste de contrôle distant. Ce système ATS est apte à communiquer à distance avec chacun des systèmes ATO via des signaux électromagnétiques, notamment via des signaux radioélectriques.

Chaque système ATO et le système ATS se présentent par exemple au moins partiellement sous la forme de calculateurs, chaque calculateur étant muni d'une mémoire et d'un processeur apte à exécuter des logiciels stockés dans cette mémoire. Selon une variante de réalisation, au moins certains de ces systèmes comprennent en outre des circuits logiques programmables, par exemple de type FPGA (de l'anglais « *Field-Programmable Gate Array* ») permettant de mettre en oeuvre au moins partiellement les fonctions assurées par ces systèmes. Selon une autre variante de réalisation, au moins certains des systèmes précités se présentent entièrement sous la forme de tels circuits.

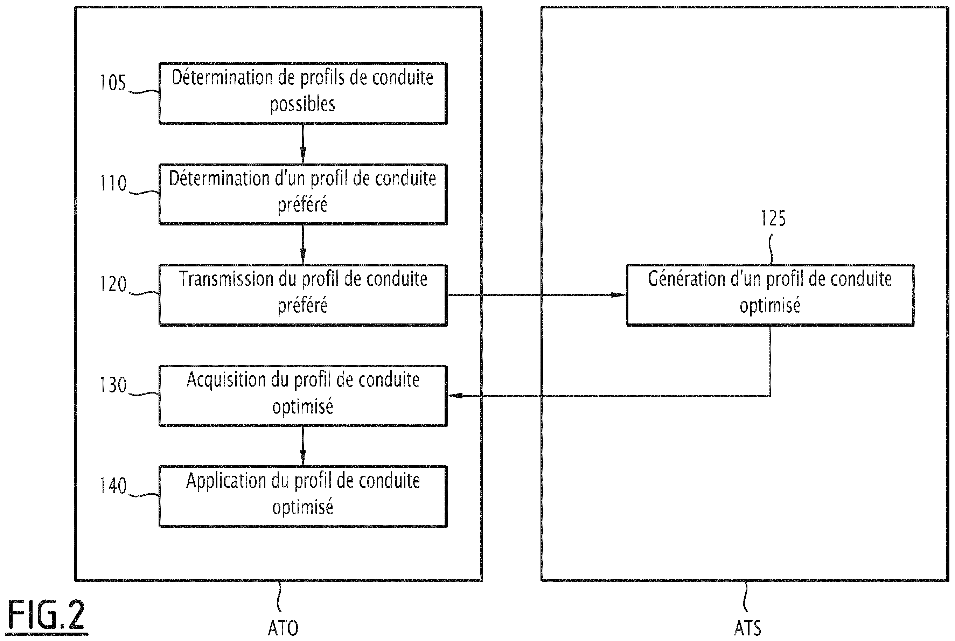

Les systèmes ATO des véhicules ferroviaires 10A,...,10N et le système ATS permettent de mettre en oeuvre le procédé d'optimisation de consommation électrique dans la section électrique 12 qui sera désormais décrit en référence à la figure 2 présentant un organigramme de ses étapes.

Les étapes décrites ci-dessous sont mises en oeuvre par chacun des systèmes ATO et le système ATS. Pour simplifier la lecture, ces étapes seront expliquées ci-dessous en relation avec un seul système ATO, par exemple celui du véhicule ferroviaire 10A. La mise en oeuvre de ces étapes en relation avec les autres systèmes ATO est analogue.

Par ailleurs, les étapes mises en oeuvre par les systèmes ATO sont mises en oeuvre au moins une fois par chaque système ATO, par exemple simultanément, et puis par au moins certains de ces systèmes ATO, à chaque changement des contraintes opérationnelles et notamment du profil de conduite, des véhicules correspondants.

Lors d'une étape initiale 105, le système ATO détermine une pluralité de profils de conduite possibles du véhicule ferroviaire 10A.

Ces profils sont par exemple déterminés en fonction de la position courante du véhicule 10A et de sa destination ainsi qu'en fonction des autres contraintes opérationnelles lors de ce trajet.

Chaque profil de conduite comprend une pluralité de créneaux temporels et pour chaque créneau temporel, une valeur de traction définissant le fonctionnement du système de traction durant ce créneau et une valeur de freinage définissant le fonctionnement du système de freinage durant ce créneau.

Les créneaux temporels définissent les instants consécutifs du trajet du véhicule ferroviaire correspondant. Chaque créneau temporel correspond par exemple à quelques secondes, par exemple sensiblement à 10 secondes, du trajet.

Lors de l'étape suivante 110, le système ATO détermine parmi les profils de conduite possibles, un profil de conduite préféré du véhicule ferroviaire 10A.

Ce profil préféré est par exemple déterminé de sorte à respecter au mieux les contraintes opérationnelles du véhicule 10A et éventuellement, de sorte à minimiser la consommation électrique de ce véhicule 10A en utilisant des données de consommation connues par le système ATO de ce véhicule 10A.

Chaque profil de conduite préféré comporte donc une pluralité de créneaux temporels et pour chaque créneau temporel, une valeur de traction souhaitée et une valeur de freinage souhaitée lors de ce créneau temporel.

En particulier, les valeurs de traction et de freinage souhaitées correspondent respectivement aux valeurs de traction et de freinage que le système ATO estime les plus adaptées aux créneaux temporels correspondants, notamment en fonction des contraintes opérationnelles du véhicule ferroviaire 10A.

Avantageusement, chaque profil de conduite préféré comporte en outre pour chaque créneau temporel, une valeur de traction minimale, une valeur de traction maximale et une valeur de freinage maximale déterminées également en fonction des contraintes opérationnelles du véhicule ferroviaire 10A.

En particulier, la valeur de traction minimale indique l'effort minimal que le système de traction doit fournir lors du créneau temporel correspondant pour éviter par exemple les situations de manque d'énergie en pentes montantes et/ou pour assurer le départ normal du véhicule 10A d'un point d'arrêt.

La valeur de traction maximale indique l'effort maximal que le système de traction est autorisé à fournir lors du créneau temporel correspondant pour éviter par exemple des situations de survitesse en virages ou en pentes descendantes. Dans les créneaux temporels correspondant à des points d'arrêt opérationnels du véhicule, la valeur de traction maximale est égale à zéro.

La valeur de freinage maximale indique l'effort maximal que le système de freinage est autorisé à fournir lors du créneau temporel correspondant. Dans les créneaux temporels correspondant à des points d'arrêt opérationnels du véhicule, la valeur de freinage maximale est égale à zéro.

Avantageusement, chaque profil de conduite préféré comporte en outre pour chaque créneau temporel, une distance estimée à parcourir par le véhicule 10A lors ce créneau temporel.

Lors de l'étape suivante 120, le système ATO envoie le profil de conduite préféré au système ATS. Cet envoi s'effectue par exemple via des liaisons radioélectriques avec ce système ATS.

Lors de l'étape suivante 125, le système ATS acquiert le profil de conduite préféré issu du système ATO du véhicule 10A et génère un profil de conduite optimisé pour ce véhicule 10A.

Le profil de conduite optimisé est déterminé en fonction des profils de conduite préférés transmis par l'ensemble des véhicules ferroviaires 10A,...,10N de la section électrique 12 au système ATS.

En particulier, le profil de conduite optimisé déterminé pour le véhicule 10A comporte pour chaque créneau temporel du profil de conduite préféré transmis par le système ATO de ce véhicule 10A, une valeur de traction optimisée et une valeur de freinage optimisée, permettant de minimiser la consommation électrique dans la section électrique 12.

Le profil de conduite optimisé pour le véhicule 10A est déterminé par le système ATS de sorte notamment à respecter dans chaque créneau temporel, la valeur de traction minimale, la valeur de traction maximale et la valeur de freinage maximale, définies par le profil de conduite préféré du véhicule 10A.

Avantageusement, le profil de conduite optimisé pour le véhicule 10A est déterminé en outre de sorte à minimiser, pour chaque créneau temporel, la différence entre un effort de traction total et un effort de freinage total dans la section électrique 12.

En particulier, l'effort de traction total dans la section électrique 12 à un instant donné correspond à une somme des valeurs de traction optimisées de l'ensemble des véhicules ferroviaires 10A,...,10N dans cette section électrique 12 à cet instant. Cette somme est par exemple pondérée en fonction des positions de ces véhicules et de la topologie du réseau électrique ou en fonction de tout autre critère d'optimisation.

De manière analogue, l'effort de freinage total dans la section électrique 12 à un instant donné correspond à une somme des valeurs de freinage optimisées de l'ensemble des véhicules ferroviaires 10A,...,10N dans cette section électrique 12 à cet instant. Cette somme est par exemple pondérée en fonction des positions de ces véhicules et de la topologie du réseau électrique ou en fonction de tout autre critère d'optimisation.

La minimisation de la différence précitée est par exemple faite en alignant les phases d'accélération de certains des véhicules 10A,...,10N avec les phases de décélération des autres véhicules, en modifiant éventuellement les heures d'arrivée et/ou de départ d'au moins certains de ces véhicules 10A,...,10N.

Avantageusement, le profil de conduite optimisé pour le véhicule 10A est déterminé en outre de sorte à limiter, pour chaque créneau temporel, l'effort de traction total dans la section électrique 12.

Cet effort de traction total est limité par un seuil de consommation imposé par exemple par le fournisseur de l'énergie électrique ou par tout autre type de contrainte.

Avantageusement, le profil de conduite optimisé pour le véhicule 10A est déterminé en outre de sorte à attribuer une valeur de traction et/ou une valeur de freinage non-autorisée(s) dans un créneau temporel donné, à un créneau temporel voisin.

Ainsi, par exemple, lorsqu'une valeur de traction ou de freinage considérée comme optimale par le système ATS dans un créneau temporel donné, n'est pas autorisé par le profil de conduite préféré du système ATO de ce créneau temporel mais est autorisée dans un créneau temporel voisin, le système ATS attribue cette valeur de traction ou de freinage à ce créneau temporel voisin.

Par créneau temporel voisin à un créneau temporel donné, on entend un créneau temporel immédiatement adjacent à ce créneau donné ou éloigné de celui-ci d'une valeur inférieure à un seuil prédéterminé qui est égal par exemple à quelques dizaines de secondes.

À la fin de cette étape 125, le système ATS transmet le profil de conduite optimisé au système ATO du véhicule 10A.

Ce profil est transmis par exemple par des signaux radioélectriques, de préférence sous la forme de messages publics, selon par exemple la technologie connue sous le terme anglais de « broadcast ».

Plus généralement, lors de l'étape 125, le système ATS génère / détermine un profil de conduite optimisé pour chaque véhicule alimenté par la section électrique 12 et à la fin de l'étape 125, envoie à chaque véhicule le profil optimisé qui lui est associé et avantageusement le profil optimisé de tous les véhicules alimentés par la section électrique 12.

Par exemple, chaque fois qu'un véhicule alimenté par la section électrique 12 envoie un profil de conduite préféré modifié au système ATS, le système ATS génère / détermine un nouveau profil de conduite optimisé pour chaque véhicule alimenté par la section électrique 12 et à la fin de l'étape 125, envoie à chaque véhicule le profil optimisé qui lui est associé et avantageusement le profil optimisé de tous les véhicules alimentés par la section électrique 12.

En variante, chaque fois que le système ATO de l'un des véhicules modifie le profil de conduite qu'il applique à la conduite du véhicule (cas de freinage imprévu, survitesse...), il envoie le profil de conduite appliqué au système ATS en tant que profil de conduite préféré et celui-ci génère / détermine un nouveau profil de conduite optimisé pour chaque véhicule alimenté par la section électrique 12.

Selon une autre variante, l'étape 125 est répétée de manière régulière avec une fréquence prédéterminée et de nouveaux profils de conduite optimisés sont calculés et envoyés aux véhicules de manière répétée.

Lors de l'étape 130 suivante, le système ATO acquiert le profil de conduite optimisé transmis par le système ATS et éventuellement le profil optimisé de tous les véhicules alimentés par la section électrique 12.

Lors de l'étape 140 suivante, le système ATO applique le profil de conduite optimisé à la conduite du véhicule 10A.

En particulier, lors de cette étape 140, le système ATO contrôle le fonctionnement du système de traction du véhicule 10A en imposant une valeur de traction pour chaque créneau temporel correspondant à la valeur de traction optimisée pour ce créneau selon le profil de conduite optimisé.

En outre, le système ATO contrôle le fonctionnement du système de freinage du véhicule 10A en imposant une valeur de freinage pour chaque créneau temporel.

Cette valeur de freinage correspond à la valeur de freinage optimisée par le système ATS lorsque cette valeur de freinage permet de respecter les contraintes opérationnelles du véhicule ferroviaire 10A lors du créneau temporel correspondant.

Dans le cas contraire, la valeur de freinage imposée est déterminée par le système ATO dynamiquement en fonction des contraintes opérationnelles, notamment afin de respecter la vitesse maximale autorisée dans le créneau temporel correspondant.

Ainsi, par exemple, lorsque le véhicule 10A se trouve en pente descendante et lorsque la valeur de freinage optimisée est insuffisante pour éviter une survitesse du véhicule 10A sur cette pente, le système ATO impose une valeur de freinage plus élevée afin d'éviter cette survitesse. Cette valeur de freinage est donc déterminée de manière dynamique.

Finalement, l'application du profil de conduite optimisé peut impliquer des décalages de l'heure de départ et/ou de l'heure d'arrivée déterminées initialement pour au moins certains points d'arrêt opérationnels.

On conçoit alors que l'invention présente un certain nombre d'avantages.

En particulier, l'invention permet d'optimiser la consommation électrique des véhicules ferroviaires circulant dans une même section électrique et cela, de manière dynamique.

Ainsi, en cas de retards ou de changements éventuels dans les horaires de ces véhicules, l'invention permet d'adopter rapidement des nouveaux horaires minimisant la consommation électrique dans toute la section électrique.

De plus, l'invention permet de limiter les pics de consommation électrique dans la section électrique donnée. Cela permet par exemple de respecter des contraintes en consommation imposées par les moyens d'alimentation électrique correspondants ou par le fournisseur de l'énergie électrique.

## Revendications

1. Procédé d'optimisation de consommation électrique d'une pluralité de véhicules (10A,...,10N) connectés à une même section électrique (12) d'alimentation, chaque véhicule comprenant :
- un système de traction propre à entrainer le véhicule (10A,...,10N) correspondant en mouvement en fonction d'une valeur de traction,
- un système de freinage propre à freiner le véhicule (10A,...,10N) correspondant en fonction d'une valeur de freinage et à injecter dans la section électrique (12) de l'énergie électrique récupérée suite au freinage, et
- un système de conduite automatisé, dit système ATO, apte à communiquer à distance avec un système de supervision automatisé, dit système ATS ;
le procédé comportant les étapes suivantes, mises en oeuvre par le système ATO de chacun des véhicules (10A,...,10N) :
- détermination (110) d'un profil de conduite préféré du véhicule (10A,...,10N) correspondant en fonction d'une position courante du véhicule et avantageusement d'une destination du véhicule, chaque profil de conduite préféré comportant une pluralité de créneaux temporels et pour chaque créneau temporel, une valeur de traction souhaitée et/ou une valeur de freinage souhaitée ;
- transmission (120) du profil de conduite préféré au système ATS ;
- acquisition (130) d'un profil de conduite optimisé généré par le système ATS, le profil de conduite optimisé étant déterminé en fonction des profils de conduite préférés transmis au système ATS par l'ensemble des véhicules (10A,...,10N) connectés à ladite section électrique (12) et comportant pour chaque créneau temporel du profil de conduite préféré correspondant, une valeur de traction optimisée et/ou une valeur de freinage optimisée, pour minimiser la consommation électrique dans ladite section électrique (12) ;
- application (140) du profil de conduite optimisé à la conduite du véhicule correspondant.

2. Procédé selon la revendication 1, dans lequel le profil de conduite préféré comporte en outre pour chaque créneau temporel, une valeur de traction minimale et/ou une valeur de traction maximale définie(s) par des contraintes opérationnelles du véhicule (10A,...,10N) correspondant.

3. Procédé selon la revendication 1 ou 2, dans lequel le profil de conduite préféré comporte en outre pour chaque créneau temporel, une valeur de freinage maximale définie par des contraintes opérationnelles du véhicule (10A,...,10N) correspondant.

4. Procédé selon les revendications 2 et 3, dans lequel le profil de conduite optimisé est déterminé de sorte à respecter la valeur de traction minimale et/ou la valeur de traction maximale et/ou la valeur de freinage maximale dans chaque créneau temporel.

5. Procédé selon l'une quelconque des revendications précédentes, dans lequel le profil de conduite optimisé est déterminé de sorte à respecter au moins l'un des critères choisi dans le groupe :
- pour chaque créneau temporel, minimisation de la différence entre un effort de traction total correspondant à une somme des valeurs de traction optimisées de l'ensemble des véhicules (10A,...,10N) dans ladite section électrique (12) et un effort de freinage total correspondant à une somme des valeurs de freinage optimisées de l'ensemble des véhicules (10A,...,10N) dans ladite section électrique (12) ;
- pour chaque créneau temporel, limitation d'un effort de traction total correspondant à une somme des valeurs de traction optimisées de l'ensemble des véhicules (10A,...,10N) dans ladite section électrique (12) ;
- attribution d'une valeur de traction et/ou d'une valeur de freinage non-autorisée(s) dans un créneau temporel donné, à un créneau temporel voisin.

6. Procédé selon l'une quelconque des revendications précédentes, comportant en outre une étape initiale (105) de détermination d'une pluralité de profils de conduite possibles du véhicule (10A,...,10N) correspondant en fonction de sa position courante et avantageusement de sa destination, chaque profil de conduite possible comportant une pluralité de créneaux temporels et pour chaque créneau temporel, une valeur de traction possible et une valeur de freinage possible ;
le profil de conduite préféré étant choisi parmi la pluralité de profils de conduite possibles.

7. Procédé selon l'une quelconque des revendications précédentes, dans lequel l'étape d'application (140) du profil de conduite optimisé à la conduite du véhicule (10A,...,10N) correspondant comprend au moins l'une des caractéristiques suivantes :
- respect de la valeur de traction optimisée pour chaque créneau temporel ;
- respect de la valeur de freinage optimisée pour chaque créneau temporel lorsque cette valeur permet de respecter des contraintes opérationnelles du véhicule (10A,...,10N) correspondant et dans le cas contraire, application de la valeur de freinage souhaitée dans le créneau temporel correspondant ;
- décalage de l'heure de départ et/ou de l'heure d'arrivée prévue(s) initialement.

8. Procédé selon l'une quelconque des revendications précédentes, dans lequel les profils de conduite optimisés sont transmis aux véhicules (10A,...,10N) par des signaux radioélectriques, de préférence sous la forme de messages publics.

9. Produit programme d'ordinateur comportant des instructions logicielles qui, lorsque mises en oeuvre par un équipement informatique, mettent en oeuvre le procédé selon l'une quelconque des revendications précédentes.

10. Système de conduite automatisé, dit système ATO, pour un véhicule (10A,...,10N) connecté à une section électrique (12) d'alimentation, le véhicule comprenant :
- un système de traction entrainant le véhicule (10A,...,10N) en mouvement en fonction d'une valeur de traction, et
- un système de freinage freinant le véhicule en fonction d'une valeur de freinage et injectant dans ladite section électrique (12) de l'énergie électrique récupérée suite au freinage;
le système ATO étant apte à communiquer à distance avec un système de supervision automatisé, dit système ATS, et comporte des moyens techniques configurés pour mettre en oeuvre les étapes du procédé selon l'une quelconque des revendications 1 à 8.

11. Système de supervision automatisé, dit système ATS, apte à communiquer à distance avec un ou plusieurs systèmes ATO selon la revendication 10 pour recevoir des profils de conduite préférés générés par ces systèmes ATO et comportant des moyens techniques configurés pour déterminer un profil de conduite optimisé à partir de ces profils de conduite préférés.
